# EUROPÄISCHE PATENTSCHRIFT

(11) **EP 1 486 078 B1**
(45) Veröffentlichungstag und Bekanntmachung des Hinweises auf die Patenterteilung: **13.06.2007**
(21) Anmeldenummer: 03720191.0
(22) Anmeldetag: 17.03.2003
(51) Int. Cl.: H04Q 3/00

(54) **HANDHABUNG VON TRANSAKTIONSMELDUNGEN IN EINEM SIGNALISIERUNGSNETZWERK BEI EINEM AUSTAUSCH EINES NETZWERKELEMENTES**
MANIPULATION OF TRANSACTION REPORTS IN A SIGNALING NETWORK ON AN EXCHANGE OF A NETWORK ELEMENT
MANIPLUATION DES MESSAGES DE TRANSACTION DANS UN RESEAU DE SIGNALISATION LORS D'UN ECHANGE D'UN ELEMENT RESEAU

(30) Priorität: 20.03.2002 DE 10212375
(43) Veröffentlichungstag der Anmeldung: 15.12.2004
(73) Patentinhaber: SIEMENS AKTIENGESELLSCHAFT, 80333 München (DE)
(72) Erfinder: VERWIMP, Gery, B-2140 Borgerhout (BE)
(86) Internationale Anmeldenummer: PCT/DE2003/000855
(87) Internationale Veröffentlichungsnummer: WO 2003/079698

(56) Entgegenhaltungen:
- EP-A- 0 817 522
- US-A1- 2001 053 218
- US-B1- 6 314 109
- JABBARI B ET AL: "Comparison of TSS application layer protocols: TCAP (Q.771-775) and ROSE (X.219/X.229)" GLOBAL TELECOMMUNICATIONS CONFERENCE, 1993, INCLUDING A COMMUNICATIONS THEORY MINI-CONFERENCE. TECHNICAL PROGRAM CONFERENCE RECORD, IEEE IN HOUSTON. GLOBECOM '93., IEEE HOUSTON, TX, USA 29 NOV.-2 DEC. 1993, NEW YORK, NY, USA,IEEE, 29. November 1993 (1993-11-29), Seiten 1039-1044, XP010109877 ISBN: 0-7803-0917-0

## Beschreibung

Die Erfindung betrifft das Gebiet der Nachrichtenübermittlung zwischen Netzwerkelementen eines Signalisierungsnetzes für den Fall des Austausches eines Netzwerkelementes, wie beispielsweise eines Routers oder Switches. Dabei wird der Fall betrachtet, dass die Netzwerkelemente bei der Übermittlung von Transaktionsmeldungen zum Auslösen von Funktionen in einem anderen Netzwerkelement Identifizierungscodes verwenden.

Die folgende Beschreibung bezieht sich auf den Fall, dass für die Regelung des Informationsaustausches in dem Signalisierungsnetz die Protokollfamilie SS#7 verwendet wird. Die Erfindung umfasst jedoch in gleicher Weise alle Anwendungen, in denen andere Protokolle mit entsprechenden Eigenschaften verwendet werden.

SS#7 beinhaltet unter anderem einen Teil, der für die Datenkommunikation verwendet wird und als 'Message Transfer Part' (MTP) bezeichnet wird. Ein weiterer Teil wird zum Auslösen von Funktionen in einem anderen Netzwerkelement verwendet und als 'Transaction Capabilities Application Part' (TCAP) bezeichnet. Typischerweise wird der TCAP dazu verwendet, auf entfernte Routingdatenbanken zuzugreifen und Dienste in intelligenten Netzwerken über mehrere Vermittlungen hinweg zu koordinieren. Meldungen, die den TCAP betreffen, werden im Folgenden als Transaktionsmeldungen bezeichnet.

Bei Netzwerkelementen eines Signalisierungsnetzwerkes kann es sich beispielsweise um Signalübertragungspunkte, genannt 'Signal Transfer Points' (STP) handeln, die als Router oder Switches fungieren. Sie nutzen bei gegenseitigem Austausch von Transaktionsmeldungen einen eigenen, das Netzwerkelement charakterisierenden Code, der üblicherweise als 'Signalling Point Code' (SPC) bezeichnet wird.

Transaktionsmeldungen von Netzwerkelementen beinhalten üblicherweise unter anderem neben den SPCs der betroffenen Netzwerkelemente als Transaktionscode eine Nummer für die Identifikation der Transaktion, die im Folgenden als Transaktions-Identifikationsnummer (TID) bezeichnet wird. Letztere wird in einem Netzwerkelement nach einem Verfahren generiert, das im Allgemeinen für jedes Netzwerkelement individuell gestaltet ist. Allerdings ist der Nummernbereich, der für die Vergabe der TIDs zur Verfügung steht typischerweise in mehreren Netzwerkelementen einheitlich.

Bei einem Austausch eines Netzwerkelementes gibt es bezüglich der Handhabung der SPCs prinzipiell zwei Möglichkeiten: Entweder erhält das Austausch-Netzwerkelement denselben SPC wie das zu ersetzende Netzwerkelement, oder aber einen anderen. Bei Wahl eines anderen SPC's kommt es zu erheblichem Aufwand, weil Änderungen der Datenbanken der verwendeten Protokolle in weiteren Netzwerkelementen vorgenommen werden müssen. Insofern ist es möglichst erstrebenswert, auf dem Austausch-Netzwerkelement denselben SPC wie auf dem zu ersetzenden Netzwerkelement zu verwenden.

Bei Austausch eines Netzwerkelementes kommt es üblicherweise zu einer zeitlichen Phase, in der das zu ersetzende und das Austausch-Netzwerkelement simultan betrieben werden. Wenn bei dem Austausch - wie beschrieben - der SPC beibehalten werden soll, kommt es während dieser Simultan-Betriebsphase jedoch zu Schwierigkeiten bezüglich der Handhabung der TIDs, da beide betroffenen Netzwerkelemente unabhängig voneinander TIDs generieren.

Üblicherweise ist es nicht möglich, auf zwei Netzwerkelementen die beiden entsprechenden Nummernbereiche, aus denen die TIDs vergeben werden, derart zu beschränken, dass sie sich gegenseitig ausschließen, weil der Generierungsvorgang von TIDs, wie oben erwähnt, nicht standardisiert ist und infolgedessen von der individuellen Implementierung auf einem Netzwerkelement abhängt. Somit stellt sich das Problem der Generierung einer eindeutigen SPC/TID Kombination für Transaktionsmeldungen.

In der US Patentschrift US 6, 314, 109-B1 wird ein Verfahren zum Ersatzschalten von Netzwerkelementen in einem Signalisierungsnetz angesprochen. Dort sind die Wege im Falle des Ersetzens eines Knotens aufgezeigt, über die die zwischen den Knoten des Netzes ausgetauschten Nachrichten geführt werden.

Der Erfindung liegt die Aufgabe zugrunde, in einem Signalisierungsnetzwerk mit wenigstens zwei seiner Netzwerkelementen, die einen identischen Code haben, eine eindeutige Zuordnung von Transaktionsmeldungen aus dem Signalisierungsnetz zu ermöglichen.

Diese Aufgabe wird mit dem in den Patentansprüchen 1 und 2 angegebenen Verfahren gelöst. Vorteilhafte Ausgestaltungen der Erfindung sind in den Unteransprüchen angegeben.

Die Erfindung wird im Folgenden zunächst für den Fall von wenigstens zwei Netzwerkelementen, einem zu ersetzenden und einem Austausch-Netzwerkelement geschildert.

Gemäß der Erfindung werden alle Transaktionsmeldungen zwischen dem zu ersetzenden Netzwerkelement und dem Signalisierungsnetz über das Austausch-Netzwerkelement geleitet. Auf diese Weise wirkt das Austausch-Netzwerkelement als Weitergabe-Station für die betreffenden Transaktionsmeldungen.

Wenn in einem Austausch-Netzwerkelement vom Signalisierungsnetz eine Transaktionsmeldung eingeht, wird zunächst durch das Austausch-Netzwerkelement geprüft, ob diese Meldung für das Austausch-Netzwerkelement selbst oder für das zu ersetzende Netzwerkelement bestimmt ist. Falls die Transaktionsmeldung für das zu ersetzende Netzwerkelement bestimmt ist, wird sie vom Austausch-Netzwerkelement mit dem zu ersetzenden Netzwerkelement als Bestimmungsziel gekennzeichnet und an den MTP des Signalisierungsnetzes zurückgesendet. Hierfür wird der 'Signalling Connection Control Part' (SCCP) von SS#7 verwendet. Im zu ersetzenden Netzwerkelement kann diese Meldung dann schließlich weiterverarbeitet werden.

Im Austausch-Netzwerkelement findet nach Eingang einer Transaktionsmeldung, die vom zu ersetzenden Netzwerkelement übermittelt wird oder für letzteres bestimmt ist, eine Registrierung der TID dieser Transaktionsmeldung statt. Mit der somit vorliegenden Information über diese TID ist es im Austausch-Netzwerkelement leicht möglich, bei der Generierung von weiteren TIDs Zweideutigkeiten auszuschließen.

Insbesondere ist es dabei gegebenenfalls nötig, dass eine Transaktionsmeldung mit einer neuen TID versehen wird. In einem solchen Fall hat also eine Transaktionsmeldung beim Eingang in das Austausch-Netzwerkelement eine andere TID als beim Verlassen des Austausch-Netzwerkelementes.

Falls wenigstens zwei Netzwerkelemente durch ein Austausch-Netzwerkelement ersetzt werden sollen, werden alle Transaktionsnachrichten zwischen den zu ersetzenden Netzwerkelementen und dem Signalisierungsnetz über das Austausch-Netzwerkelement geleitet. Bei Eingang einer Transaktionsmeldung für eines der zu ersetzenden Netzwerkelemente vom Signalisierungsnetz an das Austausch-Netzwerkelement wird in diesem Fall zunächst geprüft, für welches der zu ersetzenden Netzwerkelemente die Transaktionsnachricht bestimmt wird. Dann wird unter Wahl ebendieses Netzwerkelementes als zu ersetzendes Netzwerkelement in der oben beschriebenen Weise weiterverfahren.

Völlig analog zu dem Fall mit zwei Netzwerkelementen gestaltet sich der Fall, dass eines von mehreren zu ersetzenden Netzwerkelementen eine Transaktionsmeldung über das Austausch-Netzwerkelement an das Signalisierungsnetz sendet.

Weitere Merkmale, Vorteile und Eigenschaften sollen nunmehr anhand einer detaillierten Beschreibung eines Ausführungsbeispiels und bezugnehmend auf die Figuren der beigefügten Zeichnungen erläutert werden. Es zeigt
Figur 1 den Weg einer Transaktionsmeldung von einem Signalisierungsnetz an ein zu ersetzendes Netzwerkelement während der Simultan-Betriebsphase mit einem Austausch-Netzwerkelement;
Figur 2 zeigt den Weg einer Transaktionsmeldung von einem zu ersetzenden Netzwerkelement an ein Signalisierungsnetz während der Simultan-Betriebsphase mit einem Austausch-Netzwerkelement;
Figur 3 zeigt Komponenten eines Netzwerkelementes, die für den Weg einer Transaktionsmeldung von einem zu ersetzenden Netzwerkelement an ein Signalisierungsnetz wesentlich sind;
Figur 4 zeigt Komponenten eines Netzwerkelementes, die für den Weg einer Transaktionsmeldung von einem Signalisierungsnetz an ein zu ersetzendes Netzwerkelement wesentlich sind;
Figur 5 zeigt die Weiterverarbeitung im Koordinationsprozessor des Call Feature Servers nach Abfrage der Zieladresse.

In einem SS#7-Signalisierungsnetzwerk hat jedes Netzwerkelement einen eindeutigen Signalisierungspunkt-Code. Die Netzwerkelemente benutzen diese Codes, wenn sie untereinander Signalisierungsmeldungen austauschen.

Typischerweise dienen Transaktionsmeldungen dazu, auf entfernte Routingdatenbanken zuzugreifen und Dienste in intelligenten Netzwerken über mehrere Vermittlungen hinweg zu koordinieren. Im Fall von SS#7 wird der entsprechende Protokollteil 'Transaction Capabilities Application Part' (TACP) genannt und die entsprechenden Meldungen als TCAP-Meldungen bezeichnet.

Wenn TCAP-Meldungen zwischen den Netzwerkelementen ausgetauscht werden, enthalten die Meldungen zwischen den betroffenen Netzwerkelementen nicht nur die Signalisierungspunkt-Codes der Kommunikationspartner, sondern auch sogenannte Transaktions-Identifikationsnummern (TID). Jedes Netzwerkelement vergibt seine TIDs nach einem eigenen Schema und nutzt dabei denselben Nummernbereich wie die anderen Netzwerkelemente.

Wenn ein Netzwerkelement (zum Beispiel eine Vermittlungsstelle, die die SS#7-Signalisierung unterstützt) gegen ein neues Netzwerkelement ausgetauscht werden soll, wird üblicherweise folgendermaßen vorgegangen: Dem neuen Netzwerkelement wird ein neuer Signalisierungspunkt-Code vergeben und beide Netzwerkelemente werden so lange parallel betrieben, bis die gesamte Funktionalität (beispielsweise Teilnehmer einer Vermittlungsstelle) von dem alten auf das neue Netzwerkelement übergegangen ist. Wenn in diesem Fallbeispiel unterschiedliche Signalisierungspunkt-Codes benutzt werden, führt das zu erheblichem Aufwand, weil administrative Veränderungen in SS#7-Datenbanken von möglicherweise sehr vielen Elementen im SS#7-Netz durchgeführt werden müssen.

Um diesen Aufwand auf ein Minimum zu reduzieren, ist es erforderlich, beiden Netzwerkelementen, dem alten und dem neuen, denselben Signalisierungspunkt-Code zuzuteilen. Dies jedoch erfordert ein spezielles Verfahren im Hinblick auf die Signalisierungspunkt-Codes, welche auf den beiden Netzwerkelementen mit demselben Signalisierungspunkt-Code unabhängig voneinander generiert werden. Üblicherweise ist es nicht möglich, die TID-Verwendung durch die beiden Netzwerkelemente auf disjunkte Nummernbereiche zu beschränken, weil das Generierungsverfahren für TIDs nicht standardisiert und infolgedessen abhängig von der Implementierung ist. Daher muss es irgendwie sichergestellt werden, dass eindeutige Kombinationen aus Signalisierungspunkt-Code und TID im SS#7-Netzwerk verwendet werden.

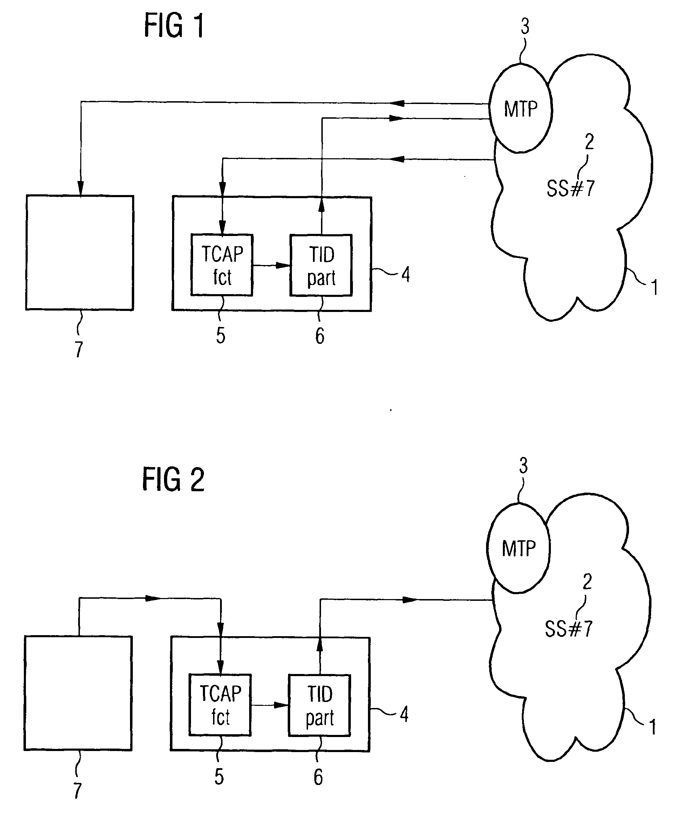

Im Falle des in den Figuren 1 und 2 schematisch dargestellten Beispiels wird als Protokollfamilie für das Signalisierungsnetz 1 SS#7 2 verwendet. Der 'Message Transfer Part' (MTP) 3 stellt denjenigen Teil der Protokollfamilie 2 dar, der die Datenkommunikation regelt.

Es wird vorausgesetzt, dass das Austausch-Netzwerkelement (das neue Netzwerkelement) und das zu ersetzende Netzwerkelement (das alte Netzwerkelement) einen identischen Signalisierungspunkt-Code, im Folgenden 'Signalling Ponit Code' (SPC) genannt, aufweisen.

Gezeigt sind in Figur 1 - durch Pfeile schematisch dargestellt - Wege einer Transaktionsmeldung während der zeitlichen Phase, in der ein Austausch-Netzwerkelement - im Beispiel in Form eines sogenannten 'Signalling Switching Point' (SSP) 4 dargestellt - und ein weiteres Netzwerkelement 7, das durch das Austausch-Netzwerkelement ersetzt werden soll, simultan betrieben werden. Das Austausch-Netzwerkelement 4 beinhaltet unter anderem eine sogenannte TCAP-Function 5, eine Bearbeitungseinheit für Transaktionsmeldungen und einen TID-Teil 6, in welchem die Verwaltung der TIDs abgewickelt wird.

Figur 1 zeigt den Weg einer Transaktionsmeldung, die vom Signalisierungsnetz 1 an das zu ersetzende Netzwerkelement 7 gerichtet ist. Erfindungsgemäß wird diese Meldung zunächst an das Austausch-Netzwerkelement 4 gesendet, das zwischen das Signalisierungsnetz und dem zu ersetzenden Netzwerkelement geschaltet ist. Dort angekommen, wird die Meldung in die TCAP-Funktion 5 geleitet. In dieser wird ermittelt, dass die Meldung für das zu ersetzende Netzwerkelement 7 bestimmt ist.

Daraufhin wird die Meldung an den TID-Teil 6 weitergeleitet, in welchem die TID dieser Meldung registriert wird. Im weiteren Verlauf wird die Meldung zurück an den MTP 3 des Signalisierungsnetzes 1 gesandt. Hierzu dient der Teil von SS#7, der für die Erweiterung der Adressierungen und die Übersetzung gültiger globaler Adressen in lokale gültige Netzwerkadressen verwendet wird, der sogenannte 'Signalling Connection Control Part' (SCCP).

Von dort gelangt die Meldung dann schließlich zu ihrem Bestimmungsort, dem zu ersetzenden Netzwerkelement 7. Die Information über die TID dieser Meldung liegt somit im Austausch-Netzwerkelement 1 vor und kann bei der Generierung weiterer TIDs berücksichtigt werden.

Figur 2 zeigt den Weg einer Transaktionsmeldung, die von dem zu ersetzenden Netzwerkelement 7 für das Signalisierungsnetz 1 bestimmt ist. Erfindungsgemäß wird diese Meldung zunächst an das Austausch-Netzwerkelement 4 gesendet. Dort angekommen, wird die Meldung in die TCAP-Funktion 5 geleitet. Hier wird ermittelt, dass die Meldung in diesem Fall für das Signalisierungsnetz 1 bestimmt ist. Daraufhin wird die Meldung an den TID-Teil 6 weitergeleitet.

Im TID-Teil 6 wird anhand der vorliegenden Informationen über die bereits verwendeten TIDs geprüft, ob die Beibehaltung der TID (der aktuellen Transaktionsmeldung) zu Zweideutigkeiten im weiteren Verlauf führen könnte. In diesem Fall wird die TID so verändert, dass sie im weiteren Verlauf eindeutig der Transaktionsnachricht zugeordnet werden kann. Andernfalls kann die TID unverändert beibehalten werden. Vom TID-Teil 6 gelangt die Meldung schließlich zu ihrem Bestimmungsort, dem Signalisierungsnetz 1.

Wiederum liegt die Information über die - gegebenenfalls neue - TID der Transaktionsmeldung im Austausch-Netzwerkelement 1 vor und kann bei der Generierung weiterer TIDs berücksichtigt werden.

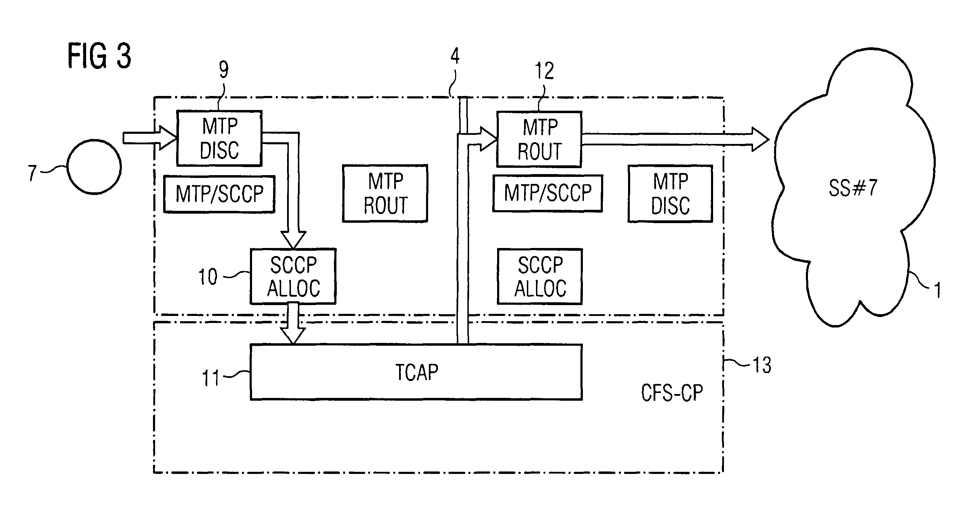

Figur 3 zeigt schematisch die Komponenten eines Netzwerkelementes 4, die bei der Übermittlung von Transaktionsmeldungen von einem zu ersetzenden Netzwerkelement 7 an das Signalisierungsnetz 1 eine Rolle spielen. Eine einlaufende Meldung wird vom MTP DISC Element 9 zum SCCP ALLOC Element 10 weitergeleitet. In diesem findet üblicherweise mittels der in der Meldung enthaltenen Angabe der globalen Adresse die Festsetzung des SPC's des Bestimmungs-Netzwerkelements statt (englisch: 'Global Title Translation', GTT). Im vorliegenden Sonderfall der Meldung, die von dem zu ersetzenden Netzwerkelement 7 stammt, wird dies jedoch nicht durchgeführt.

Die Meldung wird weitergeleitet in den Koordinationsprozessor des sogenannten 'Call Feature Servers' 13, in dem die TCAP-Anwendung 11 realisiert wird. Hier wird insbesondere die TID der Meldung registriert und gegebenenfalls verändert, um eine eindeutige Zuordnung der TID zu realisieren. Die vergebene TID liegt somit auf dem Netzwerkelement 4 vor und kann fortan berücksichtigt werden. Von dort erreicht die Meldung über das MTP ROUT Element 12 schließlich das Signalisierungsnetz 14.

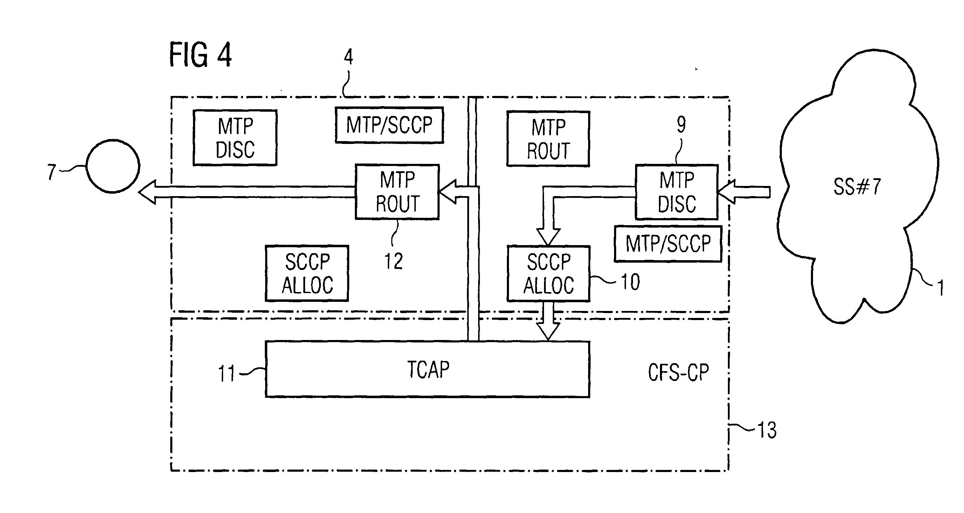

Figur 4 zeigt schematisch die Komponenten eines Netzwerkelementes 4, die bei der Übermittlung von Transaktionsmeldungen aus dem Signalisierungsnetzwerk 1 an ein zu ersetzendes Netzwerkelement 7 eine Rolle spielen. Eine einlaufende Meldung wird vom MTP DISC Element 9 zum SCCP ALLOC Element 10 weitergeleitet. Hier wird registriert, dass es sich bei dem Bestimmungs-Netzwerkelement um das zu ersetzende Netzwerkelement 8 handelt. Die Meldung wird weitergeleitet in den Koordinationsprozessor des Call Feature Servers 13, in dem die TCAP-Anwendung 11 realisiert wird. In diesem wird insbesondere die TID der Meldung registriert, so dass sie auf dem Netzwerkelement 4 fortan berücksichtigt werden kann. Von dort erreicht die Meldung über das MTP ROUT Element 12 schließlich das zu ersetzende Netzwerkelement 7.

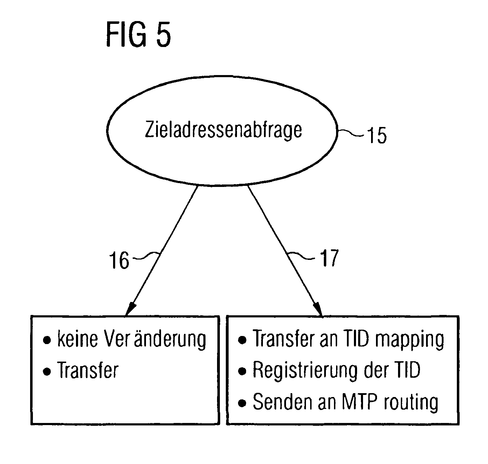

Figur 5 zeigt die Weiterverarbeitung einer Transaktionsmeldung nach Abfrage 15 der Zieladresse dieser Meldung im Koordinationsprozessor eines ersetzenden Netzwerkelementes. Falls die Meldung für das ersetzende Netzwerk selbst bestimmt ist 16, führt dies zu keiner Veränderung im laufenden Prozess. Die Meldung wird weitergeleitet an die Schnittstelle des Netzwerkelementes mit den Verbindungsleitungen zu weiteren Netzwerkelementen. Dabei sollte es sich nicht um das zu ersetzende Netzwerkelement handeln, da dies auf einen Fehler hindeuten würde.

Falls die Meldung für das zu ersetzende Netzwerkelement bestimmt ist 17, wird zunächst die TID der Meldung registriert, bevor die Meldung schließlich über MTP an das zu ersetzende Netzwerkelement weitergeleitet wird.

Der erfindungsgemäße Ablauf kann also wie folgt zusammengefasst werden:
- Die Ausgangssituation ist dadurch gegeben, dass sowohl das alte, als auch das neue SS#7-Netzwerkelement denselben Signalisierungspunkt-Code verwenden und dass es im Allgemeinen nicht möglich ist, das alte Netzwerkelement auf einen begrenzten TID-Nummernbereich zu beschränken, der disjunkt zu dem TID-Nummernbereich ist, der auf dem neuen Netzwerkelement verwendet wird.
- Nach der vorgeschlagenen Lösung werden alle Transaktionsmeldungen zwischen dem alten Netzwerkelement und dem SS#7-Netzwerk durch das neue Netzwerkelement geleitet. Das bedeutet, dass das neue Netzwerkelement eine Weitergabe-Funktion für diese Meldungen erfüllt.
- Das SS#7-Protokoll legt fest, dass erhaltene SS#7-Meldungen, die an den eigenen Signalisierungspunkt-Code gerichtet sind, an die entsprechende Anwendung übergeben werden soll, die durch die Information im Kopfteil der Nachricht festgelegt ist. Die Idee ist: Anstatt die Meldung an den empfangenden TCAP-Anwendungsteil zu leiten, wird zunächst in der TCAP-Funktion im neuen Netzwerkelement ermittelt, ob die TCAP-Meldung tatsächlich für die lokale TCAP-Funktion bestimmt ist oder ob der Empfänger auf dem alten Netzwerkelement mit demselben Signalisierungspunkt-Code aufzufinden ist. Im letzteren Fall gibt die TCAP-Funktion diese Meldung via SCCP an die MTP-Funktion zurück, damit sie von dort zu dem alten Netzwerkelement weitergeleitet werden kann, wo sie schließlich verarbeitet wird.
- Im neuen Netzwerkelement wird immer dann eine Aufzeichnung der TIDs innerhalb der TCAP-Meldungen durchgeführt, wenn diese Meldungen vom alten Netzwerkelement stammen oder für dieses bestimmt sind. Auf diese Weise werden mögliche TID-Mehrdeutigkeiten gelöst und die Meldungen werden korrekt zu den TCAP-Anwendungsteilen auf dem alten Netzwerkelement und auf dem neuen Netzwerkelement geliefert.

## Patentansprüche

1. Verfahren zum Ersatz von Netzwerkelementen in einem Signalisierungsnetz, wobei die Netzwerkelemente bei einem Versenden von Transaktionsmeldungen zum Auslösen von Funktionen in einem anderen Netzwerkelement einen das sendende Netzwerkelement identifizierenden Code und einen Transaktionscode versenden, aufweisend die folgenden Schritte:
- Leiten aller Transaktionsmeldungen zwischen dem zu ersetzenden Netzwerkelement (7) und dem Signalisierungsnetz (1) über das ersetzende Netzwerkelement (4), wobei das zu ersetzende (7) und das ersetzende Netzwerkelement (4) denselben identifizierenden Code verwenden,
- Entscheidung durch das ersetzende Netzwerkelement (4), ob eine von dem zu ersetzenden Netzwerkelement (7) ankommende Transaktionsmeldung für das Signalisierungsnetz (1) bestimmt ist, und abhängig von dieser Entscheidung Weiterleitung der Transaktionsmeldung an das Signalisierungsnetz (1) zur wieteren Verarbeitung, wobei der Transaktionscode der Transaktionsnachricht im zu ersetzenden Netzwerkelement (4) registriert und dann verändert wird, falls es im weiteren Verlauf zu Zweideutigkeiten kommt.

2. Verfahren zum Ersatz von Netzwerkelementen in einem Signalisierungsnetz, wobei die Netzwerkelemente bei einem Versenden von Transaktionsmeldungen zum Auslösen von Funktionen in einem anderen Netzwerkelement einen das sendende Netzwerkelement identifizierenden Code und einen Transaktionscode versenden, aufweisend die folgenden Schritte:
- Leiten aller Transaktionsmeldungen zwischen dem zu ersetzenden Netzwerkelement (7) und dem Signalisierungsnetz (1) über das ersetzende Netzwerkelement (4), wobei das zu ersetzende (7) und das ersetzende Netzwerkelement (4) denselben identifizierenden Code verwenden,
- Entscheidung durch das ersetzende Netzwerkelement (4), ob eine von dem Signalisierungsnetz (1) ankommende Transaktionsmeldung für das zu ersetzende Netzwerkelement (7) oder für das ersetzende Netzwerkelement (4) selbst bestimmt ist, und abhängig von dieser Entscheidung im erstgenannten Fall Weiterleitung der Transaktionsmeldung an das zu ersetzende Netzwerkelement (7) zur weiteren Verarbeitung, wobei der Transaktionscode der Transaktionsnachricht im ersetzenden Netzwerkelement (4) registriert wird.

3. Verfahren nach einem der Ansprüche 1, 2,
**dadurch gekennzeichnet,**
**dass** von einem Netzwerkelement für eine Transaktionsmeldung ein Transaktionscode vergeben wird, der der Transaktionsmeldung eindeutig zugeordnet werden kann.

4. Verfahren nach einem der Ansprüche 1 bis 3,
**dadurch gekennzeichnet,**
**dass** als Signalisierungsprotokoll SS#7 (2) verwendet wird.

5. Verfahren nach einem der Ansprüche 1 bis 4,
**dadurch gekennzeichnet,**
**dass** für die Weiterleitung einer Transaktionsmeldung der Teil des Signalisierungsprotokolls verwendet wird, der für die Bearbeitung von Adressierungen verwendet wird.

6. Verfahren nach einem der Ansprüche 1 bis 5,
**dadurch gekennzeichnet,**
**dass** eines der Netzwerkelemente in Form eines Signalübertragungsortes gegeben ist.

## Claims

1. Method for replacing network elements in a signalling network, wherein the network elements, on transmission of transaction reports for initiation of functions in another network element, transmit a code identifying the sending network element and transmit a transaction code, comprising the following steps:
- routing of all transaction reports between the network element to be replaced (7) and the signalling network (1) via the replacement network element (4), where the network element to be replaced (7) and the replacement network element (4) use the same identifying code,
- decision by the replacement network element (4) as to whether a transaction report arriving from the network element to be replaced (7) is intended for the signalling network (1) and, depending on this decision, forwarding of the transaction report to the signalling network (1) for further processing, the transaction code of the transaction message being registered in the network element (4) to be replaced and then changed if ambiguities arise in the subsequent process.

2. Method for replacing network elements in a signalling network, wherein the network elements, on transmission of transaction reports for initiation of functions in another network element, transmit a code identifying the sending network element and transmit a transaction code, comprising the following steps:
- routing of all transaction reports between the network element to be replaced (7) and the signalling network (1) via the replacement network element (4), where the network element to be replaced (7) and the replacement network element (4) use the same identifying code,
- decision by the replacement network element (4) as to whether a transaction report arriving from the signaling network (1) is intended for the network element to be replaced (7) or for the replacement network element (4) itself and, depending on this decision, in the first case forwarding of the transaction report to the network element to be replaced (7) for further processing, the transaction code of the transaction message being registered in the replacement network element (4).

3. Method according to one of claims 1 to 2,
**characterised in that**
a transaction code which can be uniquely assigned to a transaction report is issued by a network element for the transaction report.

4. Method according to one of claims 1 to 3,
**characterised in that**
SS#7 (2) is used as the signalling protocol.

5. Method according to one of claims 1 to 4,
**characterised in that**
for forwarding of a transaction report the part of the signalling protocol used is the part for processing addresses.

6. Method according to one of claims 1 to 5,
**characterised in that**
one of the network elements is embodied as a Signalling Transfer Point.

## Revendications

1. Procédé pour remplacer des éléments de réseau dans un réseau de signalisation, les éléments de réseau, lors d'une émission de messages de transaction pour déclencher des fonctions dans un autre élément de réseau, émettant un code identifiant l'élément de réseau émetteur et un code de transaction, comportant les étapes suivantes:
- acheminement de tous les messages de transaction entre l'élément de réseau à remplacer (7) et le réseau de signalisation (1) via l'élément de réseau de remplacement (4), l'élément de réseau à remplacer (7) et l'élément de réseau de remplacement (4) utilisant le même code identificateur;
- décision, par l'élément de réseau de remplacement (4), si un message de transaction venant de l'élément de réseau à remplacer (7) est destiné au réseau de signalisation (1) et, en fonction de cette décision, réacheminement du message de transaction vers le réseau de signalisation (1) pour la suite du traitement, le code de transaction du message de transaction étant enregistré dans l'élément de réseau à remplacer (7) et modifié si, par la suite, des ambiguïtés se présentent.

2. Procédé pour remplacer des éléments de réseau dans un réseau de signalisation, les éléments de réseau, lors de l'émission de messages de transaction pour déclencher des fonctions dans un autre élément de réseau, émettant un code identificateur de l'élément de réseau émetteur et un code de transaction, comportant les étapes suivantes:
- acheminement de tous les messages de transaction entre l'élément de réseau à remplacer (7) et le réseau de signalisation (1) via l'élément de réseau de remplacement (4), l'élément de réseau à remplacer (7) et l'élément de réseau de remplacement (4) utilisant le même code identificateur;
- décision, par l'élément de réseau de remplacement (4), si un message de transaction venant du réseau de signalisation (1) est destiné à l'élément de réseau à remplacer (7) ou à l'élément de réseau de remplacement (4) lui-même et, en fonction de cette décision, réacheminement, dans le premier cas, du message de transaction à l'élément de réseau à remplacer (7) pour la suite du traitement, le code de transaction du message de transaction étant enregistré dans l'élément de réseau de remplacement (4).

3. Procédé selon l'une des revendications 1, 2, **caractérisé en ce qu'**est attribué, par un élément de réseau, pour un message de transaction, un code de transaction qui peut être affecté univoquement au message de transaction.

4. Procédé selon l'une des revendications 1 à 3, **caractérisé par** l'utilisation du SS#7 (2) en tant que protocole de signalisation.

5. Procédé selon l'une des revendications 1 à 4, **caractérisé en ce qu'**est utilisé, pour le réacheminement d'un message de transaction, la partie du protocole de signalisation qui est utilisée pour le traitement d'adressages.

6. Procédé selon l'une des revendications 1 à 5, **caractérisé en ce que** l'un des éléments de réseau est donné sous la forme d'un lieu de transmission de signaux.
